# DEMANDE DE BREVET EUROPEEN

(11) **EP 2 249 467 A1**
(43) Date de publication de la demande: **10.11.2010**
(21) Numéro de dépôt: 09425178.2
(22) Date de dépôt: 08.05.2009
(51) Int. Cl.: H02K 53/00

(54) **Turbine magnétique**

(71) Demandeur: Stelio, Paulet, 00049 Velletri (RM) (IT)
(72) Inventeur: Stelio, Paulet, 00049 Velletri (RM) (IT)

(57) **Abrégé**

La turbine magnétique permet la conversion de l'énergie magnétique en énergie mécanique.

La turbine magnétique fait référence à la technique des interactions entre champs magnétiques qui engendrent des forces répulsives entre pôles de même polarité. Ce problème a été résolu avec l'utilisation appropriée de matériel magnétique, paramagnétique, diamagnétique et ferromagnétique, opportunément et géométriquement situés dans les composantes spatiales respectives sur un système d'accouplement stator/rotor.

Les aimants permanents de la composante fixe (stator), en se rapprochant des aimants du rotor, composante meuble libre de tourner, engendrent des forces répulsives qui transmettent un couple moteur à l'arbre moteur assemblé sur le rotor.

Les principales applications de cette solution technique sont dans les secteurs industriel et résidentiel (comme source primaire pour la production d'énergie électrique et énergie mécanique), et dans le secteur des transports (comme source primaire pour la traction des véhicules de transport, comme la voiture), avec des importants bénéfices pour l'environnement et pour la santé humaine.

## Description

### Le domaine de la technique de l'invention

L'invention "Turbine magnétique" fait référence au domaine de la technique des applications aptes à transformer un type spécifique d'énergie primaire (énergie magnétique) en énergie mécanique (énergie cinétique de rotation). L'invention utilise les lois de la physique des champs magnétiques, appliquées entre les aimants permanents et entre les aimants permanents et les électro-aimants, qui engendrent des forces répulsives entre les mêmes polarités, de manière que le résultant des forces ait une composante tangentielle appliquée à la circonférence du rotor, telle qu'elle constitue un couple moteur.

La force répulsive des aimants, la direction de magnétisation du matériel qui compose les aimants permanents, la disposition spatiale des aimants sur le distributeur et sur le rotor de la "Turbine magnétique" permettent d'obtenir un couple moteur qui permet la rotation du « rotor »-même. La "force" résultante "positive" ("positive" est la force qui a le vers qui favorise la rotation du rotor) est la résultante des composantes de tension positives et des celles négatives (négatives, c'est-à-dire celles qui contrarient la rotation); ces forces négatives sont des forces d'intensité plus petite qui se forment avant qu'un aimant du rotor puisse se positionner sur le même axe de poussée de l'aimant du distributeur.

La "force" résultante positive est proportionnelle à la surface des aimants et au carré de la densité du flux magnétique et inversement proportionnelle à la constante de perméabilité magnétique du vide.

### L'état de la technique préexistante à l'invention

L'état de la technique préexistante permet la transformation des énergies primaires (énergie chimique des fossiles combustibles, énergie potentielle des eaux, énergie éolienne) en énergie mécanique par des machines définies en général "Turbines" (turbines à vapeur, turbines à gaz, turbines hydrauliques, turbines éoliennes). En 2006 la "machine à aimants permanents" a été breveté (numéro de brevet: WO 2006/045333 PCT/EP 2004/012159). Elle utilise le principe de la physique des aimants qui consiste dans la répulsion des aimants en utilisant des aimants cylindrique. L'invention "Turbine magnétique" se caractérise techniquement différente du "numéro de brevet:WO2006/045333-PCT/EP2004/012159" pour les particularités géométriques des aimants du rotor et du distributeur, ainsi que des électro-aimants du distributeur, de la disposition spatiale des mêmes aimants et électro-aimants, ainsi que des différents systèmes d'interface des champs magnétiques: modèles axiaux et radiaux.

### Sommaire de la description

L'invention permet de transmettre le mouvement rotatoire à un rotor libre de tourner sur son propre axe de rotation. L'énergie qui permet la rotation du rotor vient du couple moteur engendré par les forces répulsives entre les aimants du rotor (composant mobile) et les aimants ou électro-aimants du distributeur (composant du stator). Les aimants permanents sont placés sur le rotor et sur le distributeur (stator). Les électro-aimants sont placés sur le distributeur en substitution des aimants permanents. Dans les deux cas, les interfaces des pôles sont à la polarité conforme. Les positions des aimants et des électro-aimants ont les positions suivantes:
- sur la circonférence
- sur les parois latérales

Les aimants ont une forme géométrique et une magnétisation tels qu'ils permettent de maximiser la résultante des forces, qui permet d'obtenir un couple moteur efficace. Le rotor est formé en général par: les aimants permanents, les semi secteurs pour le logement des aimants, le système serrage aimants, les roulements de support et un moyeu de rotor.

Le rotor est constitué par du matériel paramagnétique alors que les sièges, où sont placés les aimants permanents, sont recouverts de matériel diamagnétique, à l'exclusion des surfaces des pôles.

Le numéro des aimants et leur grandeur est une fonction des dimensions géométriques et des puissances qu'on veut réaliser avec la turbine magnétique.

Le distributeur (composant du stator qui permet le rapprochement des aimants du stator aux aimants du rotor) permet de changer les surfaces et/ou les distances d'interférence magnétique, et donc la force périphérique résultante, et donc le couple moteur.

Le choix des matériaux (paramagnétiques, diamagnétiques et magnétiques) qui composent la "Turbine magnétique" a la tâche spécifique d'obtenir le maximum de densité de flux magnétique dans la phase de répulsion tangentielle maximale entre le champ magnétique du distributeur et le champ magnétique du rotor.

L'interaction entre les champs magnétiques situés sur le rotor et ceux qui sont situés sur le distributeur se déroulent selon deux modèles:
- les aimants du stator sont rapprochés aux aimants du rotor de manière "radiale" par le distributeur commandé par le servomécanisme huile dynamique;
- les aimants du distributeur, stator sont rapprochés aux aimants rotor de manière "axiale" par le distributeur commandé par un servosystème olèodynamique;

Dans les deux modèles "axiaux" et "radiaux", les turbines magnétiques se réalisent à:
- Axe de rotation horizontal ou vertical
- Roue multiple (plusieurs turbines magnétiques couplées sur l'arbre même)
- Stator (distributeur) avec des électro-aimants (dispositifs électromagnétiques "bobines" en substitution des aimants permanents).

Dans le modèle "radial", les pôles des aimants du rotor sont:
- Placés en position périphérique sur la "circonférence" du rotor, avec une inclinaison sur la tangente à la périphérie de la roue du rotor d'environ 15 - 30 degrés;
- Placés en position "latérale" (droite et gauche) et ils ont une inclinaison d'environ 15 - 30 degrés par rapport au plan de symétrie du rotor qui coupe l'axe de rotation perpendiculairement.

Dans le modèle "axial", les pôles des aimants du rotor sont placés:
- En position supérieure et inférieure sur l'étagère circulaire du rotor (l'étagère circulaire est réunie à la roue rotor seulement d'un côté) et les aimants ont une inclinaison d'environ 15 - 30 degrés par rapport à la tangente de l'étagère circulaire;
- En position latérale par rapport à l'étagère circulaire du rotor, avec une inclinaison d'environ 15 - 30 degrés par rapport à un étage perpendiculaire à l'axe de rotation et passant sur le coté de l'étagère circulaire;

Les aimants du stator sont situés sur le composant distributeur dans la même direction spatiale des aimants du rotor de manière à présenter la même polarité par rapport aux aimants du rotor. On aura donc des couples de polarité Nord-Nord et Sud-Sud.

Les aimants du stator ont une surface active des pôles supérieurs des aimants du rotor entre le 110% au 140%.

La distance minimale entre les polarités des aimants du rotor et celles du distributeur ne dépasse pas 1,4 mm.

La polarité des aimants du rotor sur la circonférence se succède géométriquement avec la polarité située sur le côté. La polarité des aimants du distributeur sur la circonférence se succède géométriquement avec la polarité située sur le côté.

Les polarités des aimants distributeur/rotor à deux à deux sont conformes et ils s'alignent d'une fois à l'autre sur l'axe de magnétisation.

Dans la turbine magnétique, modèle "radial", le rapprochement des aimants du distributeur (composant du stator composé par deux composants en forme de demi-cercle) aux aimants du rotor se déroulent selon deux modalités:
- En faisant tourner les deux composantes du distributeur sur le point de rotation (charnière) situé sur la partie fixe du stator et commandé avec un servosystème oleodynamique indépendant entre les deux composants;
- En faisant rapprocher les deux composants du distributeur avec des translations latérales perpendiculaires à l'axe de rotation du rotor sur des guides fixes et commandés avec un servosystème oleodynamique indépendant entre les deux composants.

Le servosystème oleodynamique permet la régulation du couple moteur en réglant la distance de l'interférence des aimants du rotor et du stator (distributeur).

Dans la turbine magnétique, modèle "axial", le rapprochement se déroule par la translation du distributeur le long de l'axe de rotation à travers un servosystème oleodynamique. Le rapprochement du distributeur permet aux champs magnétiques du distributeur d'interagir avec les champs magnétiques du rotor.

Dans le modèle "axial", le rotor peut être équipé d'un double distributeur opposé, en utilisant un rotor en forme géométrique d'un double "E" opposé.

L'utilisation des électro-aimants sur le stator, en substitution des aimants permanents, soit pour la turbine magnétique "axial", soit pour celle "radial", est caractérisée avec leur positionnement sur le distributeur

(stator) dans la même direction spatiale et avec la polarité conforme aux aimants rotoriques permanents.

Les électro-aimants du stator ont une surface active plus grande des aimants rotors d'environ le 110%. Les électro-aimants (bobines) sont alimentés par un système de régulation qui permet d'alimenter les électro-aimants seulement dans la position de poussée tangentielle maximale et pour le temps nécessaire à obtenir le meilleur effet répulsif envers les aimants permanents du rotor.

Le système de régulation commande une batterie de condensateurs qui assure grandes intensités de courant dans les enveloppements des électro-aimants qui garantissent une haute densité de champ magnétique, 100 fois plus grande des aimants permanents.

L'alimentation des électroaimants est assurée par un système "turbine magnétique auxiliaire" dédié à l'alimentation des électroaimants et des auxiliaires en général, comme la centrale olèodynamique pour le mouvement du distributeur ou de la pompe circulation huile coussinets de la turbine magnétique.

Jusqu'à aujourd'hui on ne connaît pas des applications industrielles qui utilisent les géométries spatiales des aimants et les mêmes formes des aimants permanents, c'est-à-dire des électro-aimants.

L'énergie magnétique disponible dans les aimants permanents est une énergie presque inépuisable si on respecte les paramètres d'exercice des aimants. Si on utilise des aimants au néodyme, alors la valeur limite de la température ne peut pas dépasser les 80 degrés centigrades.

Les effets avantageux que l'invention introduit par rapport à l'état de la technique préexistante sont ceux de transformer l'énergie magnétique en énergie mécanique:
- sans l'utilisation de ressources fossiles énergétiques;
- sans l'utilisation de ressources nucléaires;
- sans l'utilisation de ressources énergétiques du vent;
- sans l'utilisation de ressources solaires;
- sans le prélèvement de ressources hydriques des fleuves et des lacs;
- sans le transport de grandes quantités de charbon, pétrole, gaz naturel;
- sans transmettre à l'extérieur les effets des champs magnétiques parce que la turbine est blindée, et de conséquence elle n'a pas d'impact sur les gens, les animaux ou les choses à l'extérieure du système "turbine magnétique";
- sans utiliser des substances chimiques dangereuses et inflammables. Il y a seulement des petites quantités d'huile pour le graissage des coussinets et des systèmes de commande du servosysteme distributeur.

L'invention permet aussi de:
- minimiser l'usage du territoire parce qu'elle n'est pas conditionnée par la morphologie de la zone et/ou des ressources naturelles de la zone (comme les installations hydroélectriques); l'invention peut être déplacée dans le sous-sol en améliorant l'usage du territoire superficiel et en annulant l'impact visuel;
- Annuler complètement les risques industriels dès qu'on utilise des combustibles fossiles (incendie, explosion, pollution);
- obtenir une valeur environnementale considérable pour combattre le chauffage global de la planète terre;
- ne pas produire ordures de processus ;
- ne pas produire de gaz serre (anhydride carbonique, oxyde de carbone, oxydes d'azote, oxydes de soufre, ensemble de particules en suspension mince 2 ppm - 5 ppm - 10 ppm);
- ne pas utiliser, pendant l'exercice, de ressources naturelles (eau, air, pétrole) qu'elles pourraient être utilisées pour d'autres processus productifs;
- ne pas avoir des systèmes d'accumulation (réservoirs, stockages), en éliminant les risques pollution;
- obtenir des conséquences positives sur la qualité de l'air, en particulier dans les villes et les métropoles parce que l'invention permet de limiter l'usage des combustibles fossiles;
- obtenir des conséquences positives non seulement sur la santé et la qualité de vie des gens, mais aussi sur la dépense sanitaire;
- être branchée aux machines traditionnelles opératrices (pompes, générateurs d'énergie électrique, autres machines opératrices), ou les remplacer comme dans le cas de la traction automobile;
- avoir nombreuses applications dans les principaux secteurs : celui industriel (par exemple autoproduction d'énergie électrique), celui des transports (par exemple naval et terrien, celui agricole et celui des constructions des logements résidentiels;
- s'adapter aisément à la technique préexistante et offrir des applications en temps très rapides et avec des avantages économiques;
- obtenir un système de grande souplesse d'application pour la simplicité de l'invention et le numéro limité des composants qui composent l'invention avec une fiabilité et des coûts d'exercice/maintenance très contenus;
- obtenir un fonctionnement continu et constant dans le temps (24h) sans besoin de sources énergétiques externes. Cette caractéristique permet à l'invention, la « turbine magnétique », d'avoir une application commerciale rapide et un impact positif et stratégique considérable pour les entreprises qui adopteront cette "technique": la turbine magnétique);
- réaliser des "turbines magnétiques" à partir de quelques watts de puissance jusqu'à quelques dizaines de mégawatt;
- recycler le 100% des composants de la turbine magnétique une fois qu'elle vient démise sans aucun impact pour l'environnement.

### Description des dessins

Les dessins suivants illustrent l'invention avec des références et détails de la technique sans mettre des limites à son but.
Fig. 1 et Fig. 2 représentent la turbine magnétique modèle "radial" à axe vertical;
Fig. 3 représente la turbine magnétique modèle "axial" à axe horizontal;
Fig. 4 représente les positionnements des aimants sur le distributeur et sur le rotor dans la turbine magnétique "radial";
Fig. 5 représente les positionnements des aimants sur le distributeur et sur le rotor dans la turbine magnétique "axial";
Fig. 6, Fig. 7, Fig. 8 et Fig. 9 représentent le détail des aimants du rotor dans le modèle "radial";
Fig. 10, Fig. 11, Fig. 12 et Fig. 13 représentent le détail des aimants du distributeur dans le modèle "axial";
Fig. 14 représente le détail de l'interférence entre les pôles des aimants du rotor et les aimants du distributeur.
Fig. 15 représente les électroaimants du stator, situés sur le distributeur de la turbine magnétique modèle "radial";
Fig. 16 représente la turbine magnétique modèle "radial" avec la caisse de protection (electromagnetique).

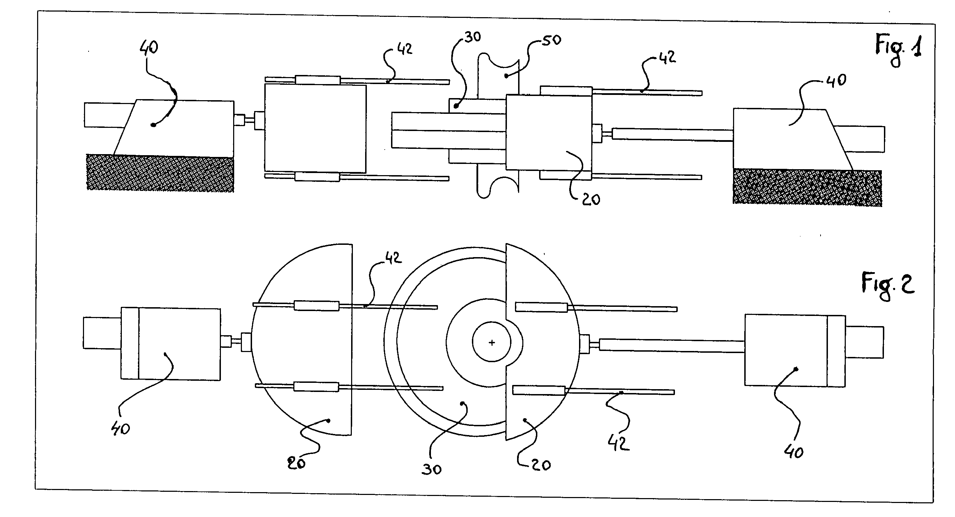

Les Fig. 1 et Fig. 2 représentent la turbine magnétique avec le distributeur (20) composé par deux composants semi-circulaires. Sur le distributeur (20) il y a les guides radiaux (42), qui permettent au distributeur (20) un mouvement de translation par le servosysteme oléodynamique (40) de commandement.

Le rapprochement du distributeur (20) au rotor (30) permet de rapprocher les champs magnétiques engendrés par les aimants du stator (62), placés sur le distributeur (20) et les champs magnétiques engendrés par les aimants du rotor (72), placés sur le rotor (30).

La force répulsive entre les aimants engendre un couple moteur qui permet la rotation du rotor (30) et ensuite de l'arbre moteur (50) sur lequel le rotor (30) est embrevé. L'énergie mécanique engendrée de cette façon peut être utilisé pour des usages multiples.

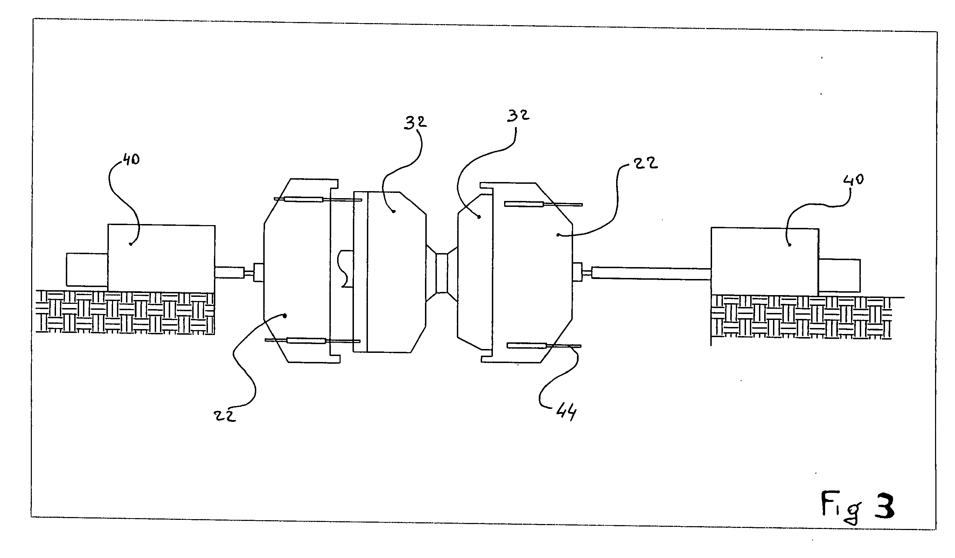

La Fig. 3 représente la turbine magnétique modèle "axial" avec un double distributeur (22). Le servosisteme oléodynamique (40) commande la translation du distributeur (22). Les guides axiaux (44) permettent l'ancrage du distributeur (22) et son insertion correcte sur le rotor (32). Le rapprochement du distributeur (22) au rotor (32) permet l'interférence des champs magnétiques produits par les aimants.

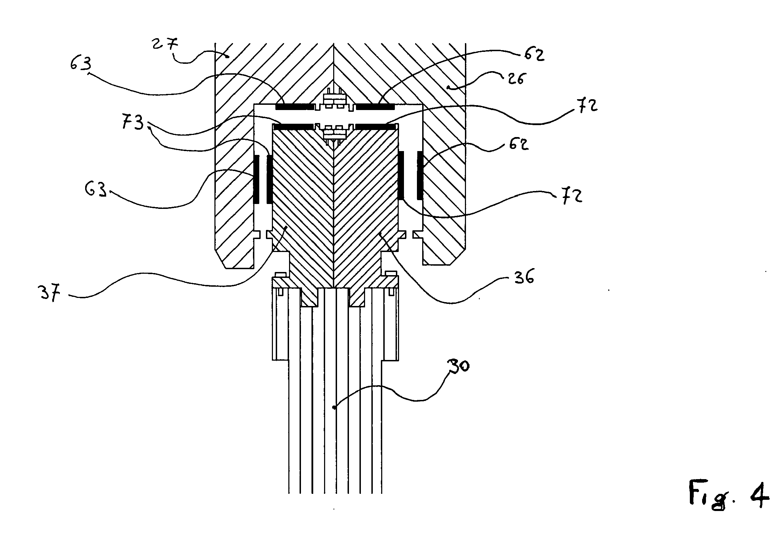

La Fig. 4 représente le positionnement des aimants sur la turbine magnétique "radial", représentée dans la Fig. 1 et 2. Les aimants du stator du distributeur (20) se composent de deux séries d'aimants: les aimants du stator de droite (62) et les aimants du stator de gauche (63). Les aimants du rotor (30) se composent de deux séries d'aimants: les aimants du rotor de droite (72) et les aimants de gauche (73). Les aimants du stator (62, 63) et les aimants du rotor (72, 73) ont une disposition spatiale telle que les polarités des interfaces soient conformes.
Les aimants sont bloqués mécaniquement dans les carrières respectives et collés avec une résine pour aimants.
Le rotor est composé dans la partie périphérique de quatre semi-secteurs à droit (36) et quatre semi-secteurs à gauche (37). Sur chaque semi-secteur du rotor, il y a de six à trente-deux aimants (72, 73).
Le distributeur est composé dans la partie périphérique de six semi-secteurs à droite (26) et des six semi secteurs à gauche (27). Sur chaque semi-secteur du distributeur, il y a de quatre à vingt-six aimants, (62, 63).
Le numéro des aimants est une fonction des dimensions et des puissances qu'on désire obtenir.

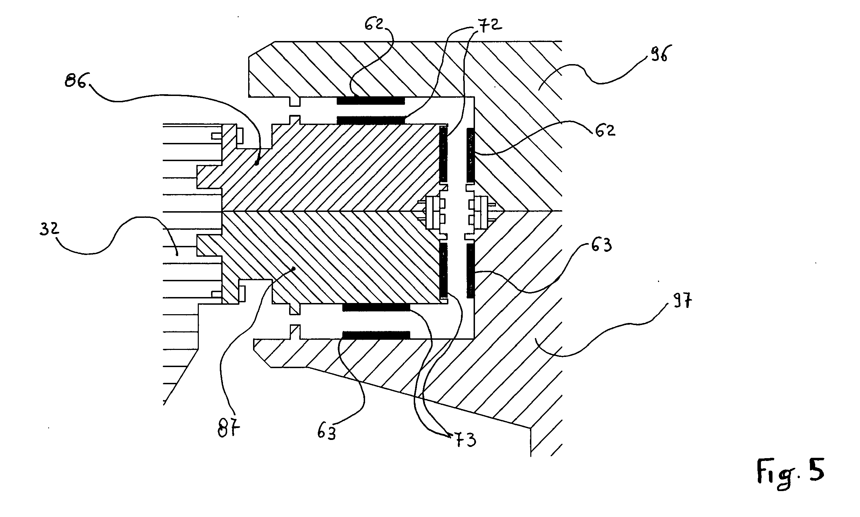

La Fig. 5 représente le positionnement des aimants sur la turbine magnétique "axial", représentée dans la Fig. 3.
Les aimants du stator du distributeur (22) se composent en deux séries d'aimants: les aimants du stator supérieur (62) et les aimants du stator inférieur (63). Les aimants du rotor (32) se composent de deux séries d'aimants: les aimants du rotor supérieur (72) et les aimants du rotor inférieur (73). Les aimants du stator (62, 63) et les aimants du rotor (72, 73) ont une disposition spatiale tel que les polarités des interfaces soient conformes.
Les aimants sont bloqués mécaniquement dans les carrières respectives et collés avec une résine pour aimants.

Le rotor est composé dans la partie périphérique de quatre semi secteurs supérieurs (86) et quatre semi secteurs inférieurs (87). Sur chaque semi secteur du rotor, il y a de six à trente-deux aimants, (72, 73).

Le distributeur est composé dans la partie périphérique de six semi secteurs supérieurs (96) et de six semi secteurs inférieurs (97). Sur chaque semi secteur du distributeur il y a de quatre à vingt-six aimants (62, 63).

Le numéro des aimants est une fonction des dimensions et des puissances qu'on désire obtenir.

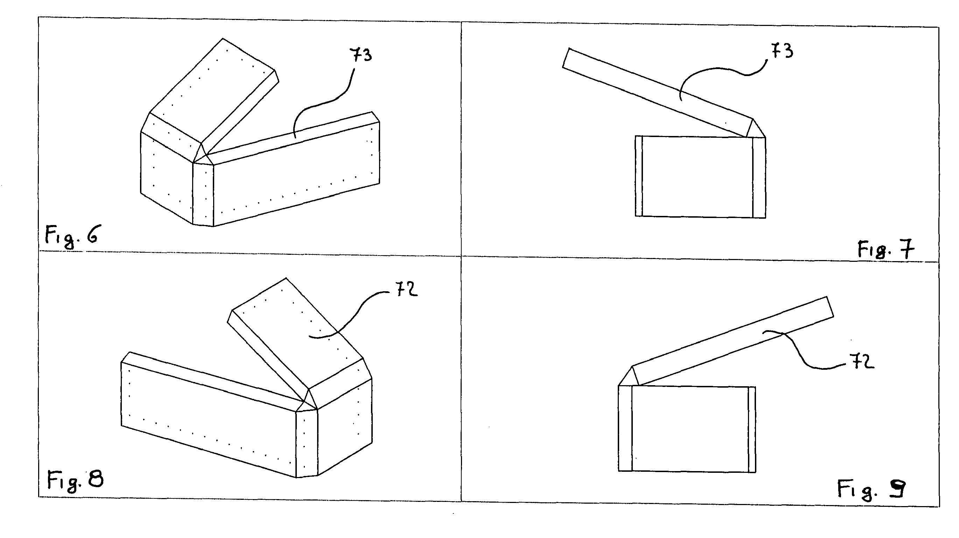

Les Fig. 6, Fig. 7, Fig. 8 et Fig. 9 représentent le détail des aimants du rotor. Les aimants sont semblables dans toute la gamme des puissances qui sont réalisées et ils sont le mêmes soit pour la turbine magnétique modèle "radial", soit pour la turbine magnétique modèle "axial". Les géométries de l'aimant du rotor droit ou supérieur (72), ainsi que celles de l'aimant du rotor gauche ou inférieur (73) sont représentées. Les aimants (72, 73) posent dans l'espace les respectives polarités de manière géométriquement déphasée.

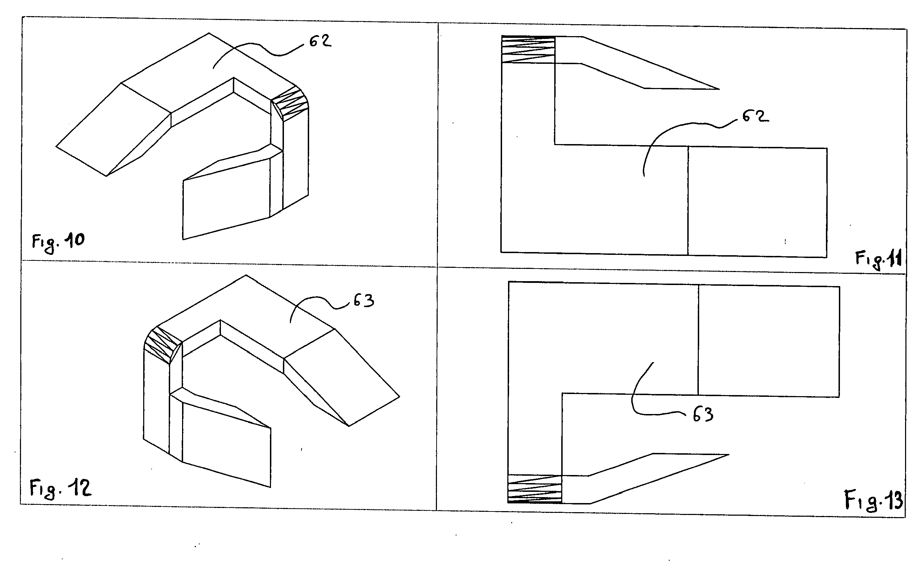

Les Fig. 10, Fig. 11, Fig. 12 et Fig. 13 représentent le détail des aimants du distributeur.

Les aimants sont semblables dans toute la gamme de puissances qui sont réalisées et ils sont les mêmes soit pour la turbine magnétique modèle "radial", soit pour la turbine magnétique modèle "axial". Les géométries de l'aimant du rotor droit ou supérieur (62) et de l'aimant rotor gauche ou inférieur (63) y sont représentées.
Chaque aimant (62, 63) dispose dans l'espace les respectives polarités de manière géométriquement déphasée. Les surfaces polaires des aimants (62, 63) sont de plus grande dimension des polarités des aimants (72, 73), présents sur le rotor.
Tous les aimants du stator (62, 63) et les aimants du rotor (72, 73) sont recouverts de matériel diamagnétique à l'exclusion des deux surfaces des pôles.

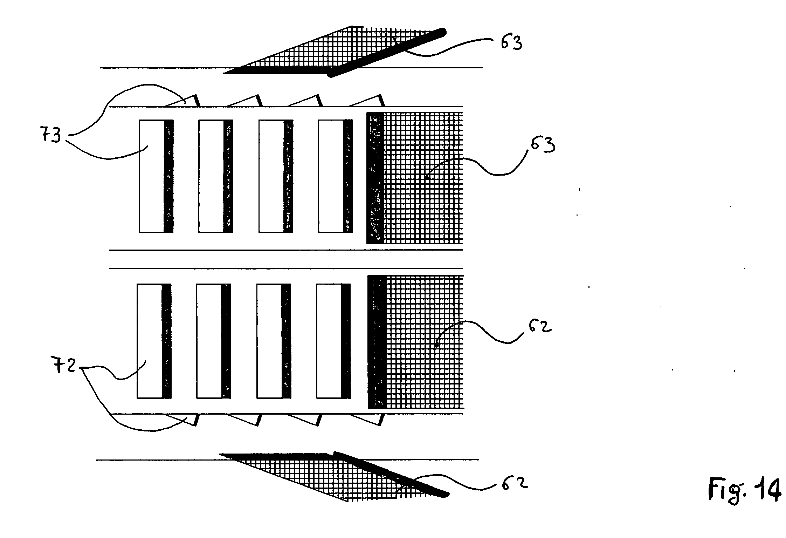

La Fig. 14 décrit une représentation totale des aimants du stator (62, 63) et des aimants du rotor (72, 73) dans une turbine magnétique. Les polarités des aimants du stator (62, 63) sont conformes aux polarités des aimants du rotor (72, 73).
La disposition spatiale des aimants et leurs formes géométriques permettent d'obtenir une force répulsive maximale.

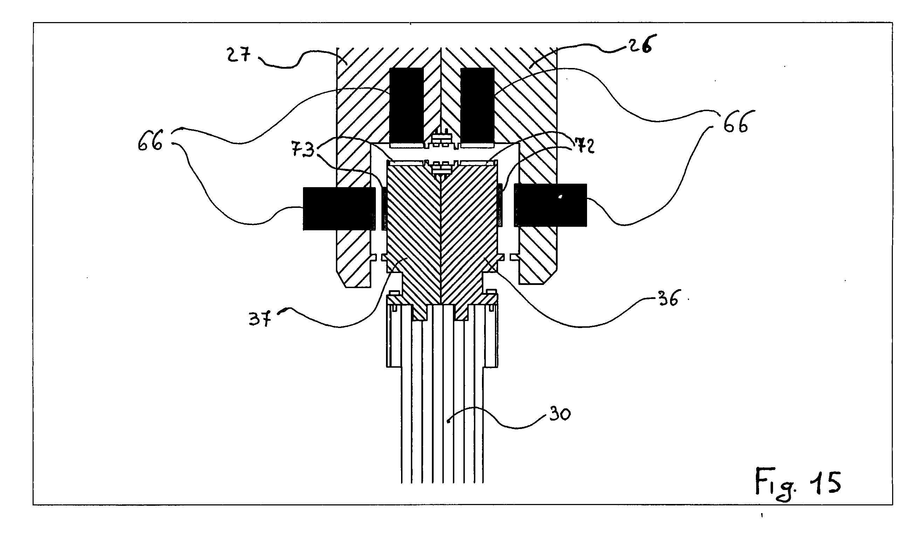

La Fig. 15 représente la turbine magnétique modèle "radial" avec des électro-aimants (66) montés sur le distributeur en substitution des aimants du stator (62, 63).

Les électro-aimants (66) permettent d'obtenir des forces répulsives 100 fois plus grandes des aimants (62, 63).

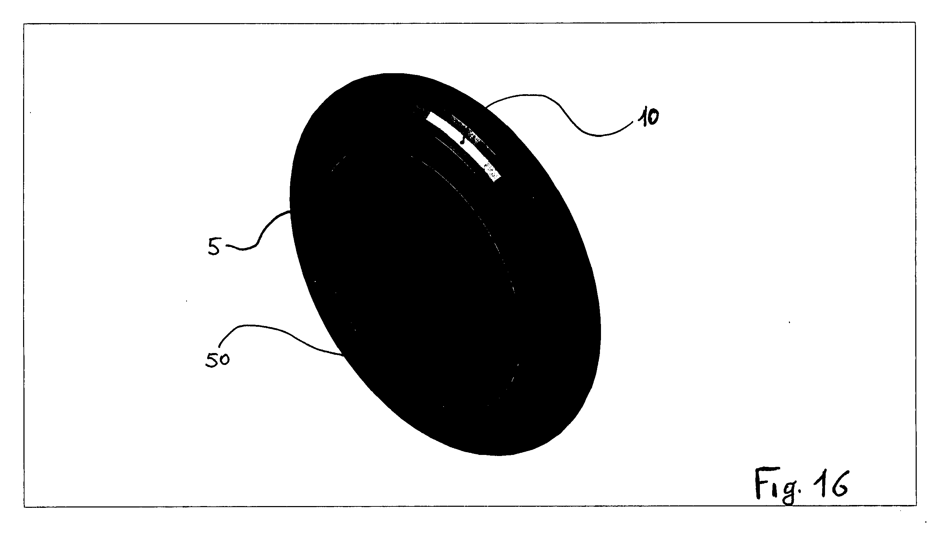

La Fig. 16 représente une turbine magnétique "radial" dans sa représentation schématique.

Sur le bord extérieur périphérique, on trouve la caisse du stator (10) qui sert d'écran des champs magnétiques du stator. Elle est constituée par deux murs de matériel avec interstice: matériel ferromagnétique dans la partie intérieure et de matériel diamagnétique paramagnétique dans le mur extérieur. L'interstice a des dimensions qui vont de 30 mm à 100 mm et elle est constituée par du matériel diamagnétique, alors que les deux murs sont isolés entre eux électriquement. La paroi intérieure de la caisse est reliée à un propre réseau de terre. La caisse du rotor (5) complète la protection des champs magnétiques du rotor de la turbine magnétique et elle est constituée par deux murs et un interstice, comme la caisse de protection du stator.

### Description de quelques exemples d'applications de l'invention

La turbine magnétique modèle "radial" est en général indiquée pour la production d'énergie électrique. L'arbre moteur (50) de la turbine magnétique radiale (Fig. 1 et Fig. 2) peut être accouplé avec un générateur d'énergie électrique au moyen d'un joint d'accouplement. La turbine magnétique est asservie à un "système de régulation" capable d'adapter le générateur d'énergie électrique pour opérer à la vitesse du rotor variable. L'arbre moteur transmet la puissance au générateur électrique à travers un rouage multiplicateur.

Toutes les fonctions de la turbine/générateur sont soumises à un monitorage et elles sont gérées par le "système de régulation", situé sur un support électronique. Le système de génération assure que la vitesse et le couple mécanique de la turbine magnétique fournissent toujours une puissance électrique stable au réseau électrique.

Tandis que le générateur d'énergie électrique est protégé contre les courts-circuits et les surcharges, la turbine magnétique est continuellement soumise à un monitorage de la température, des points du stator et du rotor au-delà des coussins, et de la vitesse et des vibrations.

La ventilation de la turbine magnétique et du générateur d'énergie est assurée respectivement par un ventilateur axial, solidaire de l'axe qui aspire l'air et la rejette respectivement à l'extérieur de la caisse turbine et de l'enveloppe du générateur électrique. Un convertisseur de courant se charge de la régulation du courant d'excitation au générateur électrique. Il contient aussi le système de contrôle des dispositifs de puissance et la gestion de mesures électriques et les protections. Le "système de régulation" de la turbine magnétique et du générateur est constitué par un processeur et ses fiches d'entrée et de sortie qui captent les signaux des différentes fonctions de la turbine magnétique/générateur, elles calculent les actions de contrôle optimal et elles donnent les ordres aux actionneurs (servosysteme oléodynamique, moteurs, électrovannes, relais) pour obtenir la distribution sûre de l'énergie électrique disponible. "Le système de régulation" de la turbine magnétique/générateur peut être mis en communication avec un contrôle lointain. À travers cette télécommande, il est possible de connaître les données dans les détails de la turbine magnétique et du générateur (valeurs actuelles d'opération, production, disponibilité, alarmes, ...), et il est possible aussi d'opérer sur le groupe turbine/générateur. Le "système de régulation" inclut la demande d'arrêt ou de démarrage et la reconnaissance de certaines alarmes d'importance pas primaire qui pourraient se vérifier dans la turbine magnétique ou dans le générateur électrique. En tout cas, toutes les alarmes seront envoyées à la télécommande pour faire une diagnostique de la panne. Le frein primaire de la turbine magnétique/générateur est l'éloignement du distributeur du rotor de la turbine magnétique radiale. La turbine magnétique est équipée aussi d'un frein mécanique qui est un frein au disque hydrauliquement activé. La turbine magnétique peut être fourni avec plusieurs rotors embrevés sur le même arbre moteur, avec des rotors de différents diamètres, avec des aimants de différentes capacités de flux magnétique et avec un arbre moteur à l'axe horizontal ou vertical. L'invention avec le distributeur à l'action "axial" se prête, en plus à la production d'énergie électrique, aussi à l'application dans le secteur "automobile." Telle application peut se passer en remplaçant le moteur préexistant (à l'essence ou diesel) avec la "turbine magnétique",en l'interfaçant avec le composant préexistant dit "échange". La puissance de transmission peut être modulée avec la variation du positionnement du distributeur. Une autre application dans le secteur automobile est celle de la substitution du moteur traditionnel avec un système "turbine magnétique + générateur électrique + système d'accumulateurs" afin d'alimenter un moteur électrique pour la transmission du mouvement aux roues motrices de la voiture.

## Revendications

1. une turbine magnétique "radial" ou "axial" comprend:
un rotor (30, 32) de matériel paramagnétique est assemblé sur un arbre de rotation (50),
un rotor (30, 32) constitué dans la partie périphérique de semi secteurs fixés sur le moyeu du rotor (35): quatre semi secteurs (36, 86) et quatre semi secteurs (37, 87) qui reçoivent respectivement les aimants du rotor (72, 73),
un rotor (30, 32) avec une cavité pour loger les aimants permanents (72, 73) bloqués mécaniquement et par collage avec des résines pour aimants,
un set d'aimants du rotor (72, 73) avec les surfaces enveloppées par matériel diamagnétique à l'exclusion des surfaces polaires,
un distributeur (20, 22) de matériel paramagnétique constitué par six semi secteurs (26, 96) et six semi secteurs (27, 97) fixés sur la base du distributeur (20, 22),
le servosysteme oléodynamique, (40) et les guides (41, 44) permettent de rapprocher et d'éloigner les aimants du stator (62, 63) des aimants du rotor (72, 73),
un set d'aimants du stator (62, 63) avec les surfaces enveloppées par du matériel diamagnétique à l'exclusion des surfaces polaires,
une caisse du stator (10) et une caisse du rotor (5) de protection des champs magnétiques; la protection est constituée par deux parois de matériel avec interstice;
la paroi intérieure est constituée par du matériel ferromagnétique, la paroi extérieure est constituée par matériel diamagnétique/paramagnétique; l'interstice est constitué par matériel diamagnétique,
l'interstice de la caisse de protection (5, 10) varie de 30 à 100 mm, tandis que les deux murs sont isolés entre eux électriquement; la paroi intérieure de la caisse vient reliée à terre avec son réseau de terre,
un frein mécanique assemblé sur l'arbre moteur (50) est constitué par un frein au disque hydrauliquement activé,
un ventilateur embrevé sur l'arbre moteur (50) pour le refroidissement intérieur de la turbine magnétique,
plusieurs rotors assemblés sur le même arbre moteur (50), ou rotors en différents diamètres, ou aimants de différentes capacités de flux magnétique,
un arbre moteur (50) à la planche horizontale ou un arbre moteur à la planche verticale

2. Les aimants du rotor (72, 73), en accord avec la revendication 1., sont placés sur la périphérie du rotor (30, 32) en file double, de manière symétrique et ils sont distribués sur toute la circonférence, sur les semi-secteurs spéciaux (36, 86) et (37, 87).

3. Les aimants du rotor (72, 73), en accord avec la revendication 1., ont des formes polyédriques telles à obtenir une inclinaison des axes des pôles sur la circonférence, par rapport à la tangente à la circonférence dans le point d'intersection, variable de 15 à 30 degrés; l'inclinaison même caractérise le pôle mis sur le côté du rotor (30, 32) par rapport au côté même du rotor.

4. Les aimants du stator (62, 63), en accord avec la revendication 1., sont placés sur le distributeur (20, 22) en file double, de manière symétrique et ils sont distribués sur toute la circonférence sur les semi-secteurs spéciaux (26, 96) et (27, 97); les polarités sont conformes aux polarités des aimants du rotor (72, 73).

5. Les aimants du stator (62, 63), en accord avec la revendication 4., ont l'axe de magnétisation du pôle conforme à celui des aimants, (72, 73) tandis que la surface des pôles des aimants (62, 63) est parallèle à la tangente à la même circonférence et la surface des pôles des aimants, (62, 63) au côté elle est parallèle au plan coïncident sur le côté du rotor (30, 32); les deux surfaces polaires des aimants (62, 63) sont située sur des plans perpendiculaires entre eux.

6. Chaque aimant du stator (62, 63) et chaque aimant du rotor (72, 73), en accord avec la revendication 1., engendre une force répulsive qui varie de 0,01 kg jusqu'au-delà de 100 kg; chaque aimant du stator (62, 63) engendre une force répulsive supérieure de l'aimant du rotor (72, 73) jusqu'au 300%.

7. Les aimants du stator (62, 63) et les aimants du rotor (72, 73), en accord avec la revendication 6., ont respectivement les polarités géométriquement déphasées et ils agissent soit sur la circonférence soit sur le côté du rotor (30, 32).

8. Par rapport à la revendication 4., où les aimants du stator sont utilisés (62, 63), la revendication 8. est **caractérisée par** l'usage d'électroaimants (66) qu'ils sont situés sur le distributeur (20, 22) sur la même direction spatiale et avec une polarité conforme aux aimants permanentes placés sur le rotor (30, 32).

9. Les aimants du stator (62, 63) en accord avec la revendication 7., ont une surface active supérieure de celle des aimants rotor entre le 110% et 140% et la distance entre les aimants du rotor (72, 73) et les aimants du stator (62, 63) ne dépasse pas 1,4 mm.

10. Les électro-aimants (66), en accord avec la revendication 8., ont une surface active supérieure à celle des aimants rotor d'environ le 110%, et la distance entre les aimants du rotor (72, 73) et les électro-aimants (66) ne dépasse pas 1,6 mm.

11. Chaque électro-aimant (66), en accord avec la revendication 10., engendre une force répulsive qui varie de 10 kg à plus de 500 kg.

12. **Un** servosystème olèodynamique (40), en accord avec la revendication 1., permet l'approche radiale du distributeur (20) au rotor (30) en utilisant un distributeur formé par deux composants qui peuvent tourner sur une charnière située sur le stator.

13. Par rapport à la revendication 12. où un servosystème olèodynamique est utilisé (40) pour la rotation du distributeur (20), la revendication 13. permet un rapprochement radiale du distributeur (20) au rotor (30), en utilisant un servosystème olèodynamique qui permet la translation du distributeur (20) avec écoulement sur guides (42).

14. Par rapport aux revendications 12. et 13., où un servosystème olèodynamique (40) est utilisé pour le rapprochement radiale du distributeur (30), la revendication 14. permet le rapprochement axiale du distributeur (22) au rotor (32), en utilisant un servosystème olèodynamique (40) pour la translation en axe au rotor (32) avec translation du distributeur (22, sur des guides (44) d'écoulement.
